# EUROPEAN PATENT SPECIFICATION

(11) **EP 0 823 457 B1**
(45) Date of publication and mention of the grant of the patent: **07.05.2003**
(21) Application number: 97306077.5
(22) Date of filing: 08.08.1997
(51) Int. Cl.: C08L 71/12, C08L 67/02, C08L 77/00, C08L 81/02

(54) **Crystalline polymer blends containing low molecular weight poly (phenylene ether) resin**
Kristalline Polymermischungen aus Polyphenylenetherharz mit niedrigem Molekulgewicht
Mélanges des polymères cristallins contenant résine de polyphénylène éther de faible masse molaire

(30) Priority: 09.08.1996 US 694900
(43) Date of publication of application: 11.02.1998
(73) Proprietor: GENERAL ELECTRIC COMPANY, Schenectady, NY 12345 (US)
(72) Inventor: Lee, Gim Fun, Jr., Albany, New York 12203 (US); Yates, John Bennie, III, Glenmont, New York 12077 (US); Scobbo, James Joseph, Jr., Slingerlands, New York 12159 (US)
(74) Representative: Szary, Anne Catherine, Dr.

(56) References cited:
- EP-A- 0 276 327
- EP-A- 0 358 993
- EP-A- 0 401 690
- EP-A- 0 454 156
- EP-A- 0 564 243
- EP-A- 0 568 039
- WO-A-87/05311

## Description

Polyphenylene ether resins (hereinafter referred to as "PPE") are generally characterized as amorphous resins having relatively high glass transition temperatures (Tg's), good ductility and high strength. A natural consequence of the high Tg's of PPE is their excellent dimensional stability over a temperature range extending up to about the Tg's of the resins. Unfortunately, PPE are limited in their chemical resistance, especially to aromatic hydrocarbon solvents, and their melt flow. Crystalline resins, on the other hand, when heated to appropriate processing temperatures past their crystalline melting points (Tm's) are generally characterized as having very low viscosities (i.e., high melt flows) especially when compared to the viscosity of PPE at their processing temperatures. Additionally crystalline resins are widely known for their chemical resistance to many solvents.

Numerous blends of PPE with various crystalline resins have previously been undertaken to enhance the chemical resistance and melt flow of the PPE. For example, US Patent Nos. 4,315,086; 4,600,741; 4,923,924; 4,978,715; and 5,089,566 relate to compositions of PPE and polyamide and/or polyester resins. Additionally, US Patent Nos. 4,373,064; 4,584,334; 4,945,018; 4,972,021; and 5,166,264 relate to blends of PPE and polyolefin resins.

One serious shortcoming of crystalline resins is their poor resistance to temperatures exceeding their Tg's but still below their Tm's. For example, polyamide 6,6 (also known as nylon-6,6) has a dry Tg of about 70°C and a dry Tm of about 257°C. The modulus of a test sample of polyamide 6,6 measured at about 25°C is about 3300 mPa whereas the modulus of the same sample measured at about 100°C is about 350 mPa. PPE (e.g., poly(2,6-dimethylphenylene ether) resin) with a Tg of about 210°C has a modulus of about 2500 mPa at 25°C and retains substantially this same modulus up to about 200°C. Blending of PPE into a polyamide to result in a blend having a polyamide continuous phase and a dispersed PPE phase would increase or reinforce the polyamide's resistance to temperatures in excess of the polyamide's Tg. This reinforcement would be effective up to the lower of either the Tg of the PPE or the Tm of the particular polyamide resin utilized in the blends. The reinforcement phenomena of PPE in polyamides is well known as noted in R.R. Gallucci Polyphenylene Ether-Polyamide Blends, SPE 44th Annual Technical Conference & Exhibit, p. 48 (1986).

In compositions wherein the Tg of the PPE is less than the Tm of the crystalline resin (such as PPE/polyamide 6,6 blends), lowering the Tg of the PPE should in theory result in a lowering of the overall heat resistance of the blend. For example, a 1:1 weight ratio of PPE and polyamide 6,6 has a heat distortion temperature (HDT) measured at 455 KPa (66 psi) of about 202°C. When the PPE is diluted with polystyrene resin to make a 0.5:0.5:1 weight ratio of polystyrene:PPE:polyamide 6,6 the heat distortion temperature drops to about 140°C. This is believed to be the result of the polystyrene lowering the Tg of the PPE to about 147°C.

Conversely, once the Tm of the crystalline resin is substantially higher than the Tg of the PPE, a further increase of the Tm does not lead to a linear increase in the HDT of the composition. For example, polyamide 6,6 has a Tm of about 257°C and a 1:1 weight to weight PPE:polyamide 6,6 blend has an HDT of about 202°C. Polyamide 4,6 has a Tm of about 287°C yet the heat distortion temperature of a 1:1 weight to weight PPE:polyamide 4,6 blend is about 206°C.

In compositions wherein the Tg of the PPE is higher than the Tm of the crystalline resin (such as in PPE/polyamide 11 or PPE/polyamide 12 blends), the heat distortion temperature measured at 455 kPa (66 psi) is about 160 to 164°C. In these blends, the crystalline continuous phase softens as the temperature approaches the corresponding melting point (polyamide 11 has a Tm of about 192°C and polyamide 12 has a Tm of about 175°C) and the heat distortion temperature is accordingly diminished. According to this theory, the PPE Tg could be reduced down to about the Tm of the polyamide continuous without significantly negatively affecting the heat resistance of the composition.

In commonly owned US Patent No. 4,972,021 it was found that blends of PPE and polypropylene wherein the PPE had an intrinsic viscosity of less than about 0.30 dl/gm had a higher heat distortion temperature than the same composition wherein the PPE had an intrinsic viscosity higher than about 0.30 dl/gm. Polypropylene has a Tm of about 165°C which is lower than the Tg of the PPE such that based on the reinforcement theory as explained above, the Tm of the polypropylene should control the heat distortion temperature in PPE/polypropylene compositions as long as the Tg of the PPE remained above the Tm of the polypropylene. The Tg of a PPE having an intrinsic viscosity of about 0.30 is about 207°C and the Tg of a PPE having an intrinsic viscosity of about 0.18 is about 185°C. The increase in the heat distortion temperature of the PPE/polypropylene blend wherein the PPE has an intrinsic viscosity of less than about 0.30 dl/gm is not completely understood but is thought to be a consequence of affecting the crystallinity of the polypropylene in some fashion by the relatively low molecular weight PPE. The effects noted in US Patent No. 4,972,021 would therefore be expected to be limited only to PPE/polypropylene blends or possibly to those PPE/crystalline resin blends wherein the Tm of the crystalline resin is below the Tg of the PPE. Consequently, increasing the heat resistance of other PPE blends or PPE blends containing crystalline resins having Tm's higher than the PPE Tg's remains a long sought after goal.

EP-A-0454156 discloses a composition comprising, based on 100 parts by weight of (A), (B) and (C), 30 to 60 parts by weight or a polyphenylene ether which is a mixture of a high viscosity polyphenylene ether (A) with an inherent viscosity of 0.4 dl/g to 1.0 dl/g and a low viscosity polyphenylene ether (B) with an inherent viscosity of 0.25 dl/g to less than 0.4 dl/g, 40-70 parts by weight of a polyamide (C) with a relative viscosity of 1.0 to 8.0, 0.1 to 10 parts by weight of a compound having both of an unsaturated group and a polar group within the same molecule and 5 to 100 parts by weight of a mineral filler and/or glass fibres.

WO87/05311 discloses compositions comprising a combination of polyphenylene ether resin and polyamide resin can be impact modified with a selectively hydrogenated diblock copolymer of styrene and ethylene/propylene which is particularly effective for thermoplastic applications requiring improved low temperature ductility.

EP-A-0276327 discloses 5-9% by weight of an aromatic polyester having an inhherent viscosity of 0.7-2.5 dl/g, 95-5% by weight of a polyphenylene ether having an inherent viscosity of 0.10-2.5 dl/g and 0.05-30 parts by weight of an epoxy compound.

The goal of increasing the heat resistance of PPE blends containing crystalline resins having crystalline melting points (Tm) higher than the PPE glass transition temperatures (Tg's) has been unexpectedly achieved by compositions consisting of a PPE resin having an intrinsic viscosity less than 0.30 dl/gm as measured in chloroform and the crystalline resin is selected from the group consisting of polyamides, polyesters, and polyarylene sulfides wherein the crystalline resin has a melting point in excess of the glass transition temperature of the PPE. In another preferred embodiment of the invention, the crystalline resin has a melting point in excess of about 210°C. the compositions may further contain impact modifiers, reinforcing fillers, reinforcing fibers, processing aids, thermal stabilizers, oxidative stabilizers, electromagnetic modifiers, flame retardants, colorants, neutralizing agents, nucleating agents, and compatibilizers.

Other objects of the present invention are thermoplastic compositions as defined in present claims 2 and 5.

### DETAILED DESCRIPTION OF THE INVENTION

PPE, per se, are known polymers comprising a plurality of structural units of the formula (I): 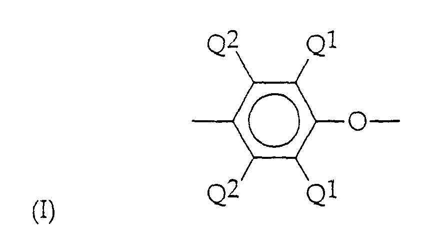 wherein for each structural unit, each Q¹ is independently halogen, primary or secondary lower alkyl (e.g., alkyl containing up to 7 carbon atoms), phenyl, haloalkyl, aminoalkyl, hydrocarbonoxy, or halohydrocarbonoxy wherein at least two carbon atoms separate the halogen and oxygen atoms; and each Q² is independently hydrogen, halogen, primary or secondary lower alkyl, phenyl, haloalkyl, hydrocarbonoxy or halohydrocarbonoxy as defined for Q¹. Preferably, each Q¹ is alkyl or phenyl, especially C₁₋₄ alkyl, and each Q² is hydrogen.

Both homopolymer and copolymer PPE are included. The preferred homopolymers are those containing 2,6-dimethyl-1,4-phenylene ether units. Suitable copolymers include random copolymers containing, for example, such units in combination with 2,3/6-trimethyl-1,4-phenylene ether units. Also included are PPE containing moieties prepared by grafting vinyl monomers or polymers such as polystyrenes, as well as coupled PPE in which coupling agents such as low molecular weight polycarbonates, quinones, heterocycles and formals undergo reaction in known manner with the hydroxy groups of two PPE chains to produce a higher molecular weight polymer.

The PPE used in the present invention has an intrinsic viscosity of less than 0.30 dl./g., preferably in the range of about 0.10 to less than 0.30 dl./g., and most preferably in the range of 0.15-0.25 dl./g., all as measured in chloroform at 25°C.

Polyesters suitable for use as Component B of the present compositions include those comprising structural units of the formula (II): 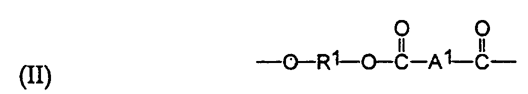 wherein each R¹ is independently a divalent aliphatic, alicyclic or aromatic hydrocarbon or polyoxyalkylene radical, or mixtures thereof and each A¹ is independently a divalent aliphatic, alicyclic or aromatic radical, or mixtures thereof. Examples of suitable polyesters containing the structure of formula (II) are poly(alkylene dicarboxylates), elastomeric polyesters, liquid crystalline polyesters, polyarylates, and polyester copolymers such as copolyestercarbonates and polyesteramides. Also included are polyesters that have been treated with relatively low levels of diepoxy or multi-epoxy compounds. It is also possible to use a branched polyester in which a branching agent, for example, a glycol having three or more hydroxyl groups or a trifunctional or multifunctional carboxylic acid has been incorporated. Treatment of the polyester with a trifunctional or multifunctional epoxy compound, for example, triglycidyl isocyanurate can also be used to make a branched polyester. Furthermore, it is sometimes desirable to have various concentrations of acid and hydroxyl endgroups on the polyester, depending on the ultimate end-use of the composition.

It is preferred for at least some of the polyester to contain nucleophilic groups such as, for example, carboxylic acid groups. In some instances, it is desirable to reduce the number of acid endgroups, typically to less than about 30 micro equivalents per gram, with the use of acid reactive species. In other instances, it is desirable that the polyester has a relatively high carboxylic end group concentration, e.g., about 5-250 micro equivalents per gram or, more preferable, about 20-70 micro equivalents per gram.

The R¹ radical may be, for example, a C₂₋₁₀ alkylene radical, a C₆₋₁₀ alicyclic radical, a C₆₋₂₀ aromatic radical or a polyoxyalkylene radical in which the alkylene groups contain about 2-6 and most often 2 or 4 carbon atoms. The A¹ radical in the above formula (II) is most often p- or m-phenylene or a mixture thereof. This class of polyesters includes the poly(alkylene terephthalates), the poly(alkylene naphthalates) and the polyarylates. Polyesters are known in the art as illustrated by the following U.S. Patents, which are incorporated herein by reference.

| | | | |
|---|---|---|---|
| 2,465,319 | 2,720,502 | 2,727,881 | 2,822,348 |
| 3,047,539 | 3,671,487 | 3,953,394 | 4,128,526 |

The poly(alkylene terephthalates), for example, poly(ethylene terephthalate) (commonly abbreviated as "PET"), poly(cyclohexyldimethanol terephthalate) (commonly abbreviated as "PCT"), and poly(butylene terephthalate) (commonly abbreviated as "PBT") are examples of suitable polyesters for the present invention. Additional suitable polyesters include poly(alkylene naphthalate)s such as, for example, poly(alkylene-2,6-naphthalate)s including poly(butylene-2,6-naphthalate) (commonly abbreviated "PBN") and poly(ethylene-2,6-naphthalate) (commonly abbreviated "PEN"). Liquid crystalline polyesters having melting points less that about 380°C and comprising recurring units derived from aromatic diols, aliphatic or aromatic dicarboxylic acids, and aromatic hydroxy carboxylic acids are also useful. Examples of useful liquid crystalline polyesters are those described in U.S. Patents 4,664,972 and 5,110,896, which are incorporated herein by reference. Various mixtures of polyesters are also sometimes very suitable.

The various polyesters can be distinguished by their corresponding glass transition temperatures (e.g., Tg) and melting points (e.g., Tm). The liquid crystalline polyesters generally have Tg's and Tm's that are higher than the naphthalate-type polyesters. The naphthalate-type polyesters generally have Tg's and Tm's that are higher than the terephthalate-type polyesters. Thus, the resultant PPE alloys with the liquid crystalline or naphthalate-type polyesters are typically better suited to applications requiring higher temperature resistance than are the terephthalate-type polyesters. The PPE alloys with terephthalate-type polyesters are generally easier to process due to the polyesters' lower Tg's and Tm's. Selection of the polyester or blend of polyesters utilized is therefore determined, in part, by the desired property profile required by the ultimate end-use application for the PPE-polyester alloy.

The polyester may include structural units of the formula (III): 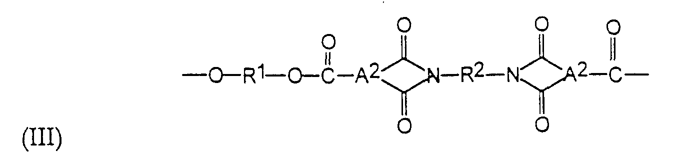 wherein R¹ is as previously defined. R² is a polyoxyalkylene radical and A² is a trivalent aromatic radical, usually derived from trimellitic acid and has the structure (IV): 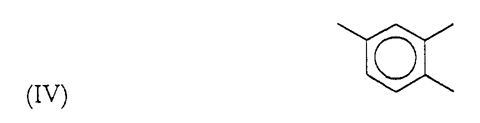 Such polymers and their mode of preparation are described for example in U.S. Pat. Nos. 4,544,734, 4,556,705, and 4,556,688, which are incorporated herein by reference.

Because of the tendency of polyesters to undergo hydrolytic degradation at the high extrusion and molding temperatures encountered by the compositions of this invention, it is preferred that the polyester be substantially free of water. The polyester may be pre-dried before admixing with the other ingredients. More commonly, the polyester is used without pre-drying and the volatile materials are removed through the use of vacuum venting the extruder.

The polyesters generally have number average molecular weights in the range of about 20,000-70,000, as determined by intrinsic viscosity (I.V.) at 30°C in a 60:40 by weight mixture of phenol and 1,1,2,2-tetrachloroethane.

Polyamides, also known as nylons, which can be used in the present invention include any polyamides and polyamide copolymers known in the art. Examples of such polyamides are those prepared by the polymerization of monomers selected from the following group:
(i) monoamino-monocarboxylic acids having at least 2 carbon atoms between the amino and carboxylic acid group;
(ii) cyclic or lactam structures of (i);
(iii) substantially equimolar proportions of a diamine which contains at least 2 carbon atoms between the amino groups and a dicarboxylic acid; and
(iv) various combinations of monoaminocarboxylic acids, lactams, diamines and dicarboxylic acids.

The term "substantially equimolar" proportions includes both strictly equimolar proportions and slight departures therefrom which are involved in conventional techniques for stabilizing the viscosity of the resultant polyamides. The balance of the monomer proportions can also be adjusted so as to control the acid to amine endgroup ratio. The dicarboxylic acid may be used in the form of a functional derivative thereof, for example, an ester or acid chloride.

Examples of the aforementioned monoamino monocarboxylic acids or lactams thereof which are useful in preparing the polyamides include those compounds containing from 2-16 carbon atoms between the amino and carboxylic acid groups, said carbon atoms forming a ring containing the -CO-NH- group in the case of lactam. As particular examples of monocarboxylic acids and lactams there may be mentioned -aminocaproic acid, butyrolactam, pivalolactam, -caprolactam, capryllactam, enentholactam, undecanolactam, dodecanolactam and 3- and 4- aminobenzoic acids.

Diamines suitable for use in the preparation of the polyamides include the straight chain and branched chain alkyl, aryl and alkaryl diamines. Illustrative diamines are trimethylenediamine, tetramethylenediamine, pentamethylenediamine, octamethylenediamine, hexamethylenediamine (which is often preferred), trimethylhexamethylenediamine, m-phenylenediamine and m-xylylenediamine. Monomers which have more than two amino groups can also be utilized to make various branched polyamide materials.

The dicarboxylic acids may be represented by the following formula (V): 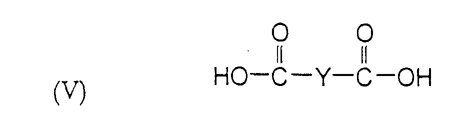 wherein Y is a divalent aliphatic or aromatic group containing at least 2 carbon atoms. Examples of aliphatic acids are sebacic acid, octadecanedioic acid, suberic acid, glutaric acid, pimelic acid and adipic acid. Monomers which have more than two carboxylic acid groups can also be utilized to make various branched polyamide materials.

Polyamides suitable for use in the present invention may be made by any known method. The polyamides can have linear or branched structures or be mixtures of linear and branched structures. They preferably contain a substantial proportion of amine end groups. Polyamides in which the amine end group concentration is at least about 40 meq./g. are particularly useful. In many instances, it is preferred that the amine to acid endgroup ratio to be about 1 or greater than 1. It is also within the scope of the invention, however, to employ predominantly carboxylic acid-terminated polyamides.

Crystalline polyamides are often preferred by reason of their solvent resistance be employed. Typical examples of the polyamides include, for example, nylon-6 (polycaprolactam), nylon-6,6 (polyhexamethylene adipamide), nylon-6,3, nylon-6,4, nylon-6,10 and nylon-6,12 as well as polyamides from terephthalic acid and/or isophthalic acid and trimethylhexamethylenediamine; from adipic acid and m-xylylenediamines; from adipic acid, azelaic acid and 2,2 bis(p-aminophenyl)propane or 2,2-bis-(p-aminocyclohexyl)propane and from terephthalic acid and 4,4' diaminodicyclohexylmethane. As previously mentioned, mixtures and/or copolymers of two or more of the foregoing polyamides or prepolymers thereof, respectively, are also within the scope of the present invention. Preferred polyamides are nylon-6, nylon-4,6, nylon-6,6, most preferably nylon-6,6 and nylon-6.

The poly(arylene sulfide) resins (referred to hereinafter as "PPS") used in the present invention are derived from the known polymers containing arylene groups separated by sulfur atoms. The preferred poly(arylene sulfide) resins include various poly(phenylene sulfide)s, for example, poly(p-phenylene sulfide) and substituted poly(phenylene sulfide)s. Typical PPS polymers comprise at least 70 molar %, preferably at least 90 molar %, of recurring units of the following structural formula (VI): 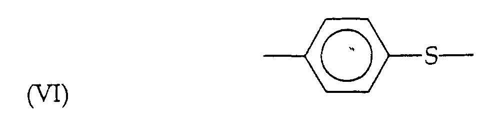 When the amount of said recurring units is less than 70 molar %, the heat resistance may be somewhat limited.

The other 30 molar % or less, and preferably 10 molar % or less, of the recurring units of PPS can be those of the following structural formulae (VII): 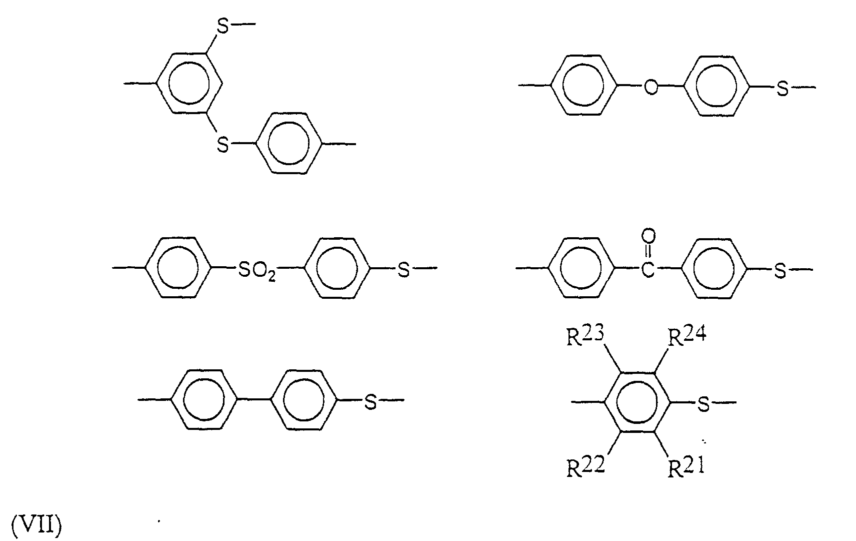 wherein R²¹, R²², R²³ and R²⁴ are independently selected from the group consisting of hydrogen, halogen, alkyl, phenyl, alkoxy, aryloxy, nitro, amino, and carboxyl groups.

The PPS of the present invention may be linear, branched, or cured polymers, or mixtures of the same. Linear PPS of relatively low molecular weight may be prepared by, for example, a process disclosed in the specification of U.S. Patent No. 3,354,129, which is incorporated herein by reference. Linear PPS having a relatively high molecular weight may be prepared by, for example, the process disclosed in the specification of U.S. Patent No. 3,919,177, which is incorporated herein by reference. Branched PPS may be prepared by the use of a branching agent, for example, 1,3,5-trichlorobenzene, which is disclosed in U.S. Patent 4,749,163 and which is incorporated herein by reference. The degree of polymerization of the polymers prepared by the processes of U.S. Patent Nos. 3,354,129, 3,919,177 and 4,749,163 can be further increased by curing in an oxygen atmosphere or in the presence of a crosslinking agent such as, for example, a peroxide after polymerization.

The PPS may be functionalized or unfunctionalized. If the PPS is functionalized, the functional groups may include, but are not limited to, amino, carboxylic acid, metal carboxylate, disulfide, thio, and metal thiolate groups. One method for incorporation of functional groups into PPS can be found in U.S. Patent No. 4,769,424, which is incorporated herein by reference, which discloses incorporation of substituted thiophenols into halogen substituted PPS. Another method involves incorporation of chlorosubstituted aromatic compounds containing the desired functionality reacted with an alkali metal sulfide and chloroaromatic compounds. A third method involves reaction of PPS with a disulfide containing the desired functional groups, typically in the melt or in a suitable high boiling solvent such as chloronaphthalene.

The PPS, more specifically, the poly(p-phenylene sulfide) resin, preferably has moieties which will react with an epoxy group or other electrophilic species. Suitable reactive groups for the PPS include, for example, amine, thiophenol, and acid groups.

Though the melt viscosity of PPS used in the present invention is not particularly limited so far as the blends which can be obtained, a melt viscosity of at least about 10 Pa.s (100 Poise) is preferred from the viewpoint of the toughness of PPS per se and that of about 1.000 Pa.s (10,000 Poise) or less is preferred from the viewpoint of the injection moldability.

The PPS in this invention may also be treated to remove unwanted contaminating ions by immersing the resin in deionized water or by treatment with an acid, typically hydrochloric acid, sulfuric add, phosphoric acid or acetic acid as found in Japanese Kokai Nos. 3,236,930-A, 1,774,562-A, 1,299,872-A and 3,236,931-A. For some product applications, it is preferred to have a very low impurity level in the PPS. The impurity level is usually represented as the percent by weight ash remaining after burning a PPS sample. Typically ash contents of the PPS of less than about 1% by weight are desirable, with ash numbers less than about 0.5% by weight preferred and ash numbers less than about 0.1% by weight most preferred.

In the compositions of the present invention, the crystalline resin is generally present in amount of amount sufficient to be a continuous phase wherein the PPE phase is dispersed within the crystalline resin phase. The weight ratio of the crystalline resin to PPE can vary widely but is generally at least 25:75 and preferably at least 35:65. Blends containing greater amounts of the crystalline resin are also very useful.

The compositions of the present invention also preferably contain a compatibilizer for the PPE and the crystalline resin. Appropriate compatibilizers are those which affect the compatibility of the PPE with the crystalline resin. Compatibility is meant to include the minimization of gross phase separation between the components of the blend (i.e., the PPE and the crystalline resin). Indications of improved compatibility include resistance to delamination, improved physical properties such as increased tensile and/or impact properties and/or a stabilized morphology between the blend component phases under static or low shear conditions.

The role of the compatibilizer is thought to effect reactions between the resin components (i.e., PPE and crystalline resin). These reaction products between the PPE and the other resin components can be block, graft and mixture of block and graft copolymers as well as random or scrambled copolymers between the various resins components depending on the compatibilizer utilized. It is possible that a variety of copolymer architectures are made in the present compositions. The presence of the copolymers is believed to be indicated by improved ductility as well as a stabilized morphology observed under static or low shear rate conditions applied to molten blends. Composition which do not contain the reaction products (i.e., copolymer) have poor morphological stability, meaning that the dispersed phase particle size increases under low shear rate conditions in the melt and the dispersed particles coalesce readily.

Numerous compatibilizers for PPE blends are known in the art as illustratively seen in U.S. Patent Nos. 4,135,086; 4,824,915; 5,001,201; 5,041,504; 5,212,255; 5,122,578; 5,132,373; and 5,247,006. The selection of an appropriate compatibilizer depends in part on the crystalline resin to be used in the composition and the available potential reactive groups present on the crystalline resin. For example, polyamide resins contain an amine endgroup and thus compatibilizers which contain anhydride or carboxylic acid moieties are often preferred for PPE/polyamide blends. Polyester resins contain carboxylic acid endgroups and so compatibilizers that contain epoxy and/or orthoester groups are among the effective compatibilizers for these PPE blends. Polyarylene sulfides are thought to have reactive sites of carboxylic acids and amines thus compatibilizers that contain moieties reactive to these groups are useful for compatibilizing PPE/polyarylene sulfide blends.

The compatibilizer may be first pre-attached to the PPE to make a functionalized or compatibilizing PPE. By making a functionalized PPE before allowing the contact of the compatibilizer with the crystalline resin, minimization of potential side or competing reactions is accomplished. The functionalized PPE may be made in solution, as illustrated by U.S. Patent Nos. 4,642,358; 4,732,937; 4,746,708; 4,859,739; 4,927,894; 4,994,525; 5,001,201; 5,041,504; 5,115,042; 5,135,983; 5,159,075; and 5,264,496, all of which are incorporated by reference. Alternatively, the functionalization may be accomplished with melt reactions, such as illustrated in U.S. Patent Nos. 4,654,405; 4,755,566; 4,808,671; 4,888,397; 4,693,620; 5,059,646; and 5,247,006. In most instances, not all of the PPE is functionalized such that use of the term functionalized PPE, is really meant a mixture of functionalized and unfunctionalized PPE effective for compatibilizing the PPE with the crystalline resin. Generally, an effective amount of the functionalizing agent is up to about 8% by weight, and is preferably from about 0.05% to about 4% by weight; based on the amount of the PPE. In the most preferred embodiments, the amount of the functionalizing agent is in the range of about 0.1% to about 3% by weight based on the amount of the PPE.

Useful examples of compatibilizers include compounds having both:
(i) a carbon-carbon double bond or a carbon-carbon triple bond and
(ii) at least one member of the group consisting of carboxylic acid, anhydride, amide, imido, ester, epoxy, amino, orthoester, hydroxyl, and carboxylic acid ammonium salt.
Illustrative compounds include: maleic anhydride, fumaric acid, maleimides such as N-phenylmaleimide and 1,4-phenylene-bis-methylene-, '-bismaleimide, maleic hydrazide, methylnadic anhydride, fatty oils (e.g., soybean oil, tung oil, linseed oil, sesame oil), unsaturated carboxylic acids such as acrylic, crotonic, methacrylic acid and oleic acid, unsaturated alcohols such as allyl alcohol and crotyl alcohol and unsaturated amines such as allylamine and trialkyl amine salts of unsaturated acids such as triethylammonium fumarate and tri-n-butylammonium fumarate. Such typical reagents are described in U.S. Patent Nos. 4,315,086, 4,755,566, and 4,888,397.

Non-polymeric aliphatic polycarboxylic acids are also useful for preparing a functionalized PPE. Included in the group of species are the aliphatic polycarboxylic acids, acid esters and acid amides represented by the formula (VIII):

(VIII) (R^{I}O)ₘR(COOR^{II})ₙ(CONR^{III}R^{IV})ₛ

wherein R is a linear or branched chain, saturated aliphatic hydrocarbon of from 2 to 20, preferably 2 to 10, carbon atoms; R^{I} is selected from the group consisting of hydrogen or an alkyl, aryl, acyl, or carbonyl dioxy group of 1 to 10, preferably 1 to 6, most preferably 1 to 4, carbon atoms, especially preferred is hydrogen; each R^{II} is independently selected from the group consisting of hydrogen or an alkyl or aryl group of from 1 to 20 carbon atoms preferably from 1 to 10 carbon atoms; each R^{III} and R^{IV} is independently selected from the group consisting essentially of hydrogen or an alkyl or aryl group of from 1 to 10, preferably from 1 to 6, most preferably 1 to 4, carbon atoms; m is equal to 1 and (n+s) is greater than or equal to 2, preferably equal to 2 or 3, and n and s are each greater than or equal to zero and wherein (OR^{I}) is alpha or beta to a carbonyl group and at least two carbonyl groups are separated by 2 to 6 carbon atoms. Obviously, R^{I}, R^{II}, R^{III} and R^{IV} cannot be aryl when the respective substituent has less than 6 carbon atoms.

Illustrative of suitable polycarboxylic acids are citric acid, malic acid, and agaricic acid; including the various commercial forms thereof, such as, for example, the anhydrous and hydrated acids. Illustrative of acid esters useful herein include, for example, acetyl citrate and mono- and/or di- stearyl citrates and the like. Suitable acid amides useful herein include for example N,N'-diethyl citric acid amide; N,N'-dipropyl citric acid amide; N-phenyl citric acid amide; N-dodecyl citric acid amide; N,N'-didodecyl citric acid amide and N-dodecyl malic acid amide. Derivatives of the foregoing polycarboxylic acids are also suitable for use in the practice of the present invention. Suitable functionalizing compounds can be found in U.S. Patent Nos. 4,315,086; 4,755,566; and 5,000,897, reference.

Orthoester containing compounds represent another preferred embodiment of the present invention. The utility of orthoester compounds to affect compatibility between PPE and crystalline resin is per se known in the art as illustrated in US Patent Nos. 5,231,197. Especially preferred orthoester compounds include those containing the formulas (IX) and (X):

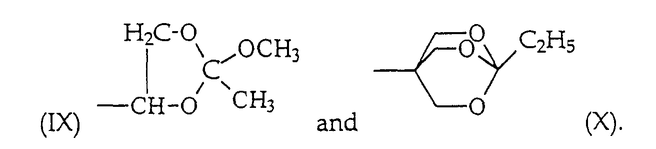

An orthoester functional PPE may be prepared by solution-capping of PPE having hydroxy end groups with an ortho ester functionalized halotriazine. The PPE having orthoester functional moieties is preferably prepared by melt extrusion of PPE with at least one graftable ethylenically unsaturated ortho ester monomer. The functional ortho ester monomer may be represented by the general formula (XI) 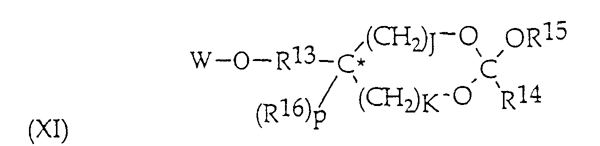 wherein R¹⁴, R¹⁵, R¹⁶, J, K, p and C* are as previously defined, R¹³ is a C₁₋₆ alkylene radical and W is a graftable unsaturated group represented by the following formula (XII) 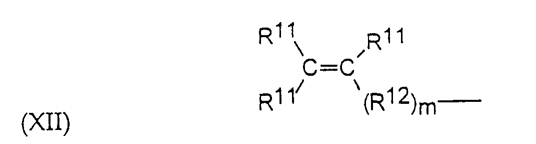 wherein each R¹¹ may independently be hydrogen; or a C₁₋₈ radical, or substituted derivatives thereof; or an aryl radical, or substituted derivative thereof; or any other group that is inert to the ortho ester. The value of m may be 1 or greater. R¹² can be one of the following formulae (XIII):

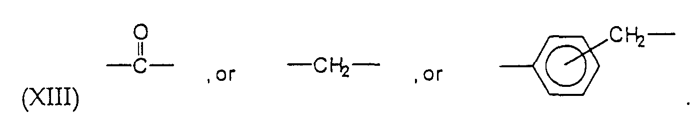

Illustrative examples of ortho ester monomers which may be employed in the present invention include 4-acryloyloxymethyl-2-methoxy-2-methyl-1,3-dioxolane, 4-methacryloyloxymethyl-2-methoxy-2-methyl-1,3-dioxolane, 4-acryloyloxymethyl-2-methoxy-2-phenyl-1,3-dioxolane and the isomeric mixture of 4-(2-methoxy-2-methyl-1,3-dioxolanyl)methyl vinylbenzyl ethers. Methods for the preparation of various useful ortho ester materials and their reaction with PPE can be found in U.S. Patent Nos. 5,132,373, 5,142,049, 5,171,866, 5,153,290 and 5,212,255.

Preferably the ethylenically unsaturated ortho ester monomer is of the formula (XIV):

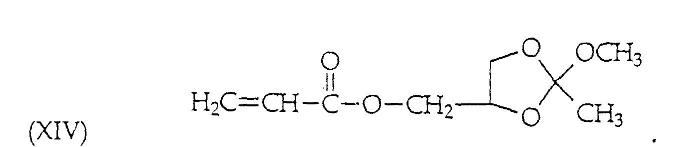

Another preferred ethylenically unsaturated ortho ester monomer is represented by the formula (XV):

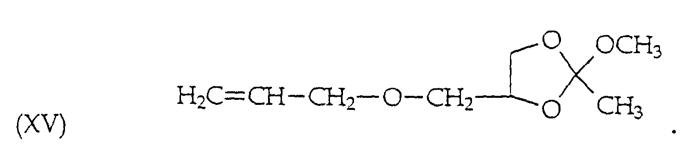

It is sometimes advantageous to use an initiator in the melt preparation of the orthoester functional PPE with an ethylenically unsaturated ortho ester monomer. It is also sometimes advantageous to employ at least one lubricant which is substantially inert to the ortho ester and other ingredients. The presence of the lubricant decreases the required melt processing temperature to produce the functionalized PPE, as well as the compatibilized blends prepared therefrom. As a result, gel formation is minimized. Suitable lubricants will be apparent to those skilled in the art; in general, they are solids with high lubricity or relatively low melting solids or oils.

The compositions of the present invention may also contain at least one impact modifier that is not a compatibilizer compound for resin composition. The impact modifiers include elastomeric block (typically diblock, triblock or radial teleblock) copolymers of alkenyl aromatic compounds and dienes. Most often at least one block is derived from styrene and at least one block from at least one of butadiene and isoprene. Especially preferred are the triblock and diblock copolymers comprising polystyrene blocks and diene derived blocks wherein the aliphatic unsaturation has been preferentially removed with hydrogenation. Mixtures of various copolymers are also sometimes useful. The weight average molecular weights of the impact modifiers are typically in the range of about 50,000 to 300,000. Block copolymers of this type are commercially available from Shell Chemical Company under the trademark KRATON, and include, for example, grades D1101, D1102, G1650, G1651, G1652, G1701 and G1702.

Other suitable impact modifiers are the core-shell type graft copolymers. In general, these have a predominantly conjugated diene rubbery core or a predominantly cross-linked acrylate rubbery core and one or more shells polymerized thereon and derived from monoalkylarene and/or acrylic monomers alone or, preferably, in combination with other vinyl monomers. The core-shell copolymers are widely available commercially in pellet and powder forms, for example, from Rohm and Haas Company under the trade names EXL-3330, EXL-3691, EXL-2600, EXL-2607, EXL-2647, EXL-3386, and EXL-3607, and are described in U.S. Patent Nos. 3,808,180, 4,034,013, 4,096,202, 4,180,494 and 4,292,233.

Various mixtures of the aforementioned impact modifiers are also sometimes useful. The amount of the impact modifier generally present, when one is used, is an amount effective to improve the physical properties, for example, the ductility of the composition when compared to the same composition without an impact modifier. Improved ductility can be indicated by increased impact strength or increased tensile elongation to break. Generally, the impact modifier is utilized in the range of about 1% to about 20% by weight based on the total weight of the composition. The preferred range is about 3% to about 15% by weight; based on the total weight of the composition and the most preferred range is between about 5% to about 12% by weight; based on the total weight of the composition. The exact amount and types or combinations of impact modifiers utilized will depend in part on the requirements needed in the final blend composition.

Compositions of the present invention can also include effective amounts of at least one additive selected from the group consisting of anti-oxidants, flame retardants, drip retardants, crystallization nucleators, dyes, pigments, colorants, reinforcing agents, fillers, stabilizers, antistatic agents, plasticizers and lubricants. These additives are known in the art, as are their effective levels and methods of incorporation. Effective amounts of the additives vary widely, but they are usually present in an amount up to about 50% or more by weight, based on the weight of the entire composition.

Preparation of the compositions of the present invention is normally achieved by melt blending the ingredients under conditions for the formation of an intimate blend. Such conditions often include mixing in single or twin screw type extruders or similar mixing devices which can apply a shear to the components. It is often advantageous to apply a vacuum to the melt through a vent port in the extruder to remove volatile impurities in the composition. The compositions of the present invention are useful for making molded articles such as housings for electrical connectors in under-the-hood automotive applications, and are useful for making various other molded articles.

All of the ingredients may be added initially to the processing system, or else certain additives may be pre-reacted or pre-compounded with each other or with one of the primary polymer components, PPE, compatibilizer compound and crystalline resin. It appears that certain properties, such as impact strength and elongation, are sometimes enhanced by initially functionalizing the PPE with at least one of the typical compatibilizing agents prior to blending with the crystalline resin. While separate extruders may be used in the processing, these compositions may also be prepared by using a single extruder having multiple feed ports along its length to accommodate the addition of the various components. It is also sometimes advantageous to employ at least one vent port in each section between the feed ports to allow venting (either atmospheric or vacuum) of the melt. Those of ordinary skill in the art will be able to adjust blending times and temperatures, as well as component addition location and sequence, without undue additional experimentation.

It should be clear that the present invention affords a method to increase the heat resistance of PPE blends with at least one crystalline resin, especially blends with at least one crystalline resin having a melting point of at least about 210°C. The method involves admixing a PPE having an intrinsic viscosity less than 0.30 dl/gm. with at least one crystalline resin having a crystalline melting point greater than the glass transition temperature of the PPE. The PPE phase is preferably the dispersed phase.

### EXAMPLES

The compositions of Tables 1 and 2 were extruded on a Werner-Pfleiderer twin-screw extruder at a temperature of about 275-300°C with a vacuum of 2491-4982 Pa (10-20 inches Hg) applied to the melt during compounding. The resultant compositions were molded using a Toshiba injection molding machine using a temperature set of about 275-300°C and a mold temperature of about 80-110°C. Samples of the compositions were also subjected to measurement of notched Izod impact strength according to ASTM D256 (employing a sample size of 6.35 cm (2.5 inch) by 12.7 mm (0.5 inch) by 3.975 mm (0.125 inch)), Dynatup (energy to fracture, falling dart test) strength according to ASTM D3763 (using 10.16 cm (4 inch) diameter by 3.175 mm (0.125 inch) disks), flexural modulus and flexural strength according to ASTM D790 (employing a sample size of 15.24 cm (6 inch) by 12.7 mm (0.5 inch) by 6.35 mm (0.25 inch)), heat deflection under a load of 455 kPa (66 psi) according to ASTM D648 (employing a sample size of 15.24 cm (6 inch) by 12.7 mm (0.5 inch) by 6.35 mm (0.25 inch)), heat sag according to ASTM D and tensile yield and tensile elongation at break according to ASTM D638.

The materials used in the following examples were as follows:
PPE-anhydride is poly(2,6-dimethylphenylene ether) resin which has been reacted with trimellitic anhydride acid chloride to result in an anhydride functionalized PPE having an intrinsic viscosity of about 0.46 dl/gm measured in chloroform at 25°C, obtained from GE Plastics.
PPE-epoxy is poly(2,6-dimethylphenylene ether) resin which has been reacted with mesityl-glycidoxyl-chlorocyanurate to result in an epoxy functionalized PPE having an intrinsic viscosity of about 0.40 dl/gm measured in chloroform at 25°C, obtained from GE Plastics.
PPE-0.25 is poly(2,6-dimethylphenylene ether) resin having an intrinsic viscosity of about 0.25 dl/gm measured in chloroform at 25°C, obtained from GE Plastics.
PPE-0.28 is poly(2,6-dimethylphenylene ether) resin having an intrinsic viscosity of about 0.28 dl/gm measured in chloroform at 25°C, obtained from GE Plastics.
PPE-0.46 is poly(2,6-dimethylphenylene ether) resin having an intrinsic viscosity of about 0.46 dl/gm measured in chloroform at 25°C, obtained from GE Plastics.
HDPE is a high density polyethylene obtained from Soltex Polymer Co. under the tradename FORTIFLEX as grade B54-25H-96.
PET-1 is a poly(ethylene terephthalate) resin having an I.V. of about 0.59 as measured in a 1:1 weight to weight mixture of phenol:1,1,2,2-tetrachloroethane at 30°C.
PET-2 is a poly(ethylene terephthalate) resin having an I.V. of about 0.72 as measured in a 1:1 weight to weight mixture of phenol:1,1,2,2-tetrachloroethane at 30°C.
TDP is tridecyl phosphite.
additives is a mixture of hindered phenol, thio compound, poly(α-olefin) lubricant, talc, and polytetrafluoroethylene added at 1.6 total weight percent.

The following examples are provided to illustrate some embodiments of the present invention. They are not intended to limit the invention in any aspect. All amounts are parts by weight based on the total weight of the entire composition, unless otherwise indicated.

**Table 1.**

| (Not part of the invention) | | | | | | |
|---|---|---|---|---|---|---|
| Sample: | 1 | 2 | 3 | 4 | 5 | 6 |
| PPE - 0.25 | 50 | 0 | 50 | 0 | 50 | 0 |
| PPE - 0.46 | 0 | 50 | 0 | 50 | 0 | 50 |
| HDPE | 50 | 50 | 50 | 50 | 50 | 50 |
| KG-1652 | 10 | 10 | 5 | 5 | 10 | 10 |
| TDP | 0 | 0 | 0 | 0 | 3 | 3 |

| properties: | | | | | | |
|---|---|---|---|---|---|---|
| HDT (°F) | (318) | (269) | (271) | (224) | (278) | (259) |
| °C. | 159 | 132 | 133 | 107 | 137 | 126 |
| NI, (ft-lb/in) | (5.8) | (9.3) | (1.8) | (1.5) | (1.8) | (5.7) |
| J/m | 309.1 | 495.7 | 95.9 | 80.0 | 95.9 | 303.8 |
| Tensile yield strength, (psi) | (6000) | (5100) | (6000) | (3600) | (6200) | (4900) |
| kPa | 41369 | 35163 | 41369 | 24821 | 42748 | 33784 |
| Flex. Mod., (Kpsi) | (205) | (169) | (249) | (179) | (248) | (203) |
| MPa | 1413 | 1165 | 1717 | 1234 | 1710 | 1400 |

As noted by the illustrative data in Table 1, blends of high density polyethylene and low molecular weight PPE have higher HDT, tensile yield strength and flexural modulii that the same composition made utilizing a higher molecular weight PPE. Comparison of the HDT of samples 1 and 2, each containing 10 parts of a elastomeric block copolymer, to the HDT of samples 3 and 4, each containing only 5 parts of a elastomeric block copolymer, further demonstrates that the sample containing the larger amount of elastomer have a higher HDT. These results are also unexpected since the elastomeric block copolymer is known to plasticize the PPE and would be expected to further reduce the Tg of the PPE. Samples 5 and 6 which contain 3 parts tridecyl phosphite show lowered HDT as compared to samples 1 and 2 but sample 5 containing the lower IV PPE still retains a higher HDT than sample 6 that contains the higher IV PPE.

**Table 2.**

| Sample: | 7 | 8 |
|---|---|---|
| PPE-Anhydride | 22.5* | 22.5 |
| PPE- 0.46 | 22.5 | 0 |
| PPE- -.28 | 0 | 22.5 |
| PA-6,6 | 45 | 45 |
| KG-1702 | 10 | 10 |

| properties: | | |
|---|---|---|
| HDT (°F) | (365) | (382) |
| °C | 185 | 194 |
| Heat sag @(400°F) mm 204°C | 21.7 | 15.4 |
| NI, (ft-lb/in) | (11) | (9.2) |
| J/m | 586.3 | 490.4 |
| Flex. Mod., (Kpsi) | (285) | (324) |
| MPa | 1965 | 2234 |
| Tensile yield strength, (psi) | (8605) | (9294) |
| KPa | 59329 | 64080 |

| | | |
|---|---|---|
| * Comparative | | |

As noted by the illustrative examples in Table 2, sample 8 containing the 0.28 I.V. PPE has higher HDT, heat sag, flexural modulus and tensile yield strength when compared to the same composition containing 0.46 I.V. PPE (sample 7) in place of the lower I.V. PPE material. These results are unexpected as the Tg of the PPE phase is lower than the melting point of the polyamide 6,6 used in the compositions. A lowering of the I.V. would be expected to decrease the thermal properties since the PPE Tg should be controlling the thermal properties of these blends.

**Table 3.**

| Sample: | 9* | 10 | 11* | 12 |
|---|---|---|---|---|
| PPE-epoxy | 20 | 20 | 30 | 30 |
| PPE-0.46 | 20 | 0 | 10 | 0 |
| PPE--.28 | 0 | 20 | 0 | 10 |
| PET-1 | 50 | 50 | 0 | 0 |
| PET-2 | 0 | 0 | 50 | 50 |
| KD-1102 | 10 | 10 | 10 | 10 |
| additives | yes | yes | yes | yes |

| properties: | | | | |
|---|---|---|---|---|
| HDT (°F) | (284) | (299) | (295) | (334) |
| °C | 140 | 148 | 146 | 168 |
| NI @ 23°C, (ft-lb/in) | (1.6) | (2.7) | (1.7) | (2.0) |
| J/m | 85.3 | 143.9 | 90.6 | 106.6 |
| NI@ -30°C, (ft-lb/in) | (1.1) | (1.7) | (1.0) | (1.3) |
| J/m | 58.6 | 90.6 | 53.3 | 69.3 |
| Dynatup @ 23°C, (ft-lb) | (10) | (36) | (35) | (33) |
| Nm | 13.6 | 48.8 | 47.5 | 44.7 |
| Dynatup @-30°C, (ft-lb) | (6) | (27) | (13) | (23) |
| Nm | 8.1 | 36.6 | 17.6 | 31.2 |
| Tensile yield strength, (psi) | (7800) | (8100) | (7300) | (7600) |
| KPa | 53779 | 55848 | 50332 | 52400 |

| | | | | |
|---|---|---|---|---|
| * Comparative | | | | |

The illustrative data in Table 3 demonstrates part of the unexpected results obtained for PPE/polyester blends containing lower I.V. PPE. As seen by comparing sample 10 to sample 9 and sample 12 to sample 11, not only are the HDT properties unexpectedly higher for the low I.V. PPE containing samples (i.e., samples 10 and 12), but also the impact strengths are also unexpected increased with the use of the lower I.V. PPE as compared to the higher I.V. PPE containing blends (i.e., samples 9 and 11).

The preceding examples are provided to illustrate some embodiments of the present invention. They are not intended to limit the invention in any aspect

## Claims

1. A thermoplastic composition consisting of:
(a) a dispersed phase consisting of a polyphenylene ether resin having an intrinsic viscosity less than 0.30 dl/gm measured in chloroform at 25°C; and
(b) a continuous phase consisting of a crystalline resin having a crystalline melting point greater than the glass transition temperature of the polyphenylene ether resin, wherein the crystalline resin is selected from the group consisting of polyester resins, polyamide resins, and polyarylene sulfide resins.

2. A thermoplastic composition consisting of:
(a) a dispersed phase consisting of a polyphenylene ether resin having an intrinsic viscosity less than 0.30 dl/gm measured in chloroform at 25°C; and
(b) a continuous phase consisting of a crystalline resin having a crystalline melting point greater than the glass transition temperature of the polyphenylene ether resin, wherein the crystalline resin is selected from the group consisting of polyester resins, polyamide resins, and polyarylene sulfide resins; and optionally
(c) a copolymer of a polyphenylene ether resin and said crystalline resin (b) wherein the crystalline resin has a crystalline melting point greater than the glass transition temperature of the polyphenylene ether resin, and
(d) at least one additive selected from the group consisting of impact modifiers, reinforcing fillers, non-elastomeric metal salts, flow promoters, flame retardants, drip retardants, dyes, pigments, colorants, stabilizers, antistatic agents, crystallization nucleators, plasticisers, non-reinforcing fillers and lubricants.

3. The thermoplastic composition of claim 1 or claim 2, wherein the melting point of the crystalline resin is at least about 210°C.

4. The thermoplastic composition of claim 1 or claim 2, wherein the crystalline resin is selected from the group consisting of poly(butylene terephthalate), poly(ethylene terephthalate), poly(butylene naphthalate), poly(ethylene napthalate), polyamide-6,6, polyamide-6, poly(p-phenylene sulfide), and liquid crystalline polyester resins.

5. A thermoplastic composition comprising:
(a) a dispersed phase comprising a polyphenylene ether resin having an intrinsic viscosity less than 0.30 dl/gm measured in chloroform at 25°C;
(b) a continuous phase comprising a crystalline resin having a crystalline melting point greater than the glass transition temperature of the polyphenylene ether resin, wherein the crystalline resin is selected from the group consisting of polyester resins, polyamide resins, and polyarylene sulfide resins; and
(c) a copolymer of a polyphenylene ether resin and said crystalline resin (b) wherein the crystalline resin has a crystalline melting point greater than the glass transition temperature of the polyphenylene ether resin.

6. A method to increase the heat resistance of poly(phenylene ether) resin blends with at least one crystalline resin, the method consisting of admixing a poly(phenylene ether) resin having an intrinsic viscosity less than 0.30 dl/gm measured in chloroform at 25°C with at least one crystalline resin having a crystalline melting point greater than the glass transition temperature of the poly(phenylene ether) resin wherein the crystalline resin is selected from the group consisting of polyester resins, polyamide resins, and polyarylene sulfide resins.

7. The method of claim 6 wherein the at least one crystalline resin has a melting point of at least about 210°C.

8. The method of claim 7 wherein the polyphenylene ether resin is a dispersed phase.

## Patentansprüche

1. Thermoplastische Zusammensetzung, bestehend aus:
(a) einer dispergierten Phase, bestehend aus einem Polyphenylenetherharz mit einer Grenzviskosität von weniger als 0,30 dℓ/g, gemessen in Chloroform bei 25°C und
(b) einer kontinuierlichen Phase, bestehend aus einem kristallinen Harz mit einem kristallinen Schmelzpunkt von mehr als der Glasübergangs-Temperatur des Polyphenylenetherharzes, wobei das kristalline Harz ausgewählt ist aus der Gruppe bestehend aus Polyesterharzen, Polyamidharzen und Polyarylensulfidharzen.

2. Thermoplastische Zusammensetzung, bestehend aus:
(a) einer dispergierten Phase, bestehend aus einem Polyphenylenetherharz mit einer Grenzviskosität von weniger als 0,30 dℓ/g, gemessen in Chloroform bei 25°C und
(b) einer kontinuierlichen Phase, bestehend aus einem kristallinen Harz mit einem kristallinen Schmelzpunkt von mehr als der Glasübergangs-Temperatur des Polyphenylenetherharzes, wobei das kristalline Harz ausgewählt ist aus der Gruppe bestehend aus Polyesterharzen, Polyamidharzen und Polyarylensulfidharzen und, gegebenenfalls
(c) einem Copolymer eines Polyphenylenetherharzes und des kristallinen Harzes (b), worin das kristalline Harz einen kristallinen Schmelzpunkt von mehr als der Glasübergangs-Temperatur des Polyphenylenetherharzes aufweist, und
(d) mindestens einem Zusatz, ausgewählt aus der Gruppe bestehend aus die Schlagzähigkeit modifizierenden Mitteln, verstärkenden Füllstoffen, nicht-elastomeren Metallsalzen das Fließen fördernden Mitteln, Entflammungshemmern, Tropfverzögerern, Farbstoffen, Pigmenten, Färbemitteln, Stabilisatoren, antistatischen Mitteln, Kristallisationskeimen, Weichmachern, nicht-verstärkenden Füllstoffen und Schmiermitteln.

3. Thermoplastische Zusammensetzung nach Anspruch 1 oder 2, worin der Schmelzpunkt des kristallinen Harzes mindestens etwa 210°C beträgt.

4. Thermoplastische Zusammensetzung nach Anspruch 1 oder 2, worin das kristalline Harz ausgewählt ist aus der Gruppe bestehend aus Poly(butylenterephthalat), Poly(ethylenterephthalat), Poly(butylennaphthalat), Poly(ethylennaphthalat), Polyamid-6,6, Polyamid-6, Poly(p-phenylensulfid) und kristallinen flüssigen Polyesterharzen.

5. Thermoplastische Zusammensetzung, umfassend:
(a) eine dispergierte Phase, umfassend ein Polyphenylenetherharz mit einer Grenzviskosität von weniger als 0,30 dℓ/g, gemessen in Chloroform bei 25°C und
(b) eine kontinuierliche Phase, umfassend ein kristallines Harz mit einem kriställinen Schmelzpunkt von mehr als der Glasübergangs-Temperatur des Polyphenylenetherharzes, wobei das kristalline Harz ausgewählt ist aus der Gruppe bestehend aus Polyesterharzen, Polyamidharzen und Polyarylensulfidharzen, und
(c) ein Copolymer eines Polyphenylenetherharzes und des kristallinen Harzes (b), worin das kristalline Harz einen kristallinen Schmelzpunkt von mehr als der Glasübergangs-Temperatur des Polyphenylenetherharzes aufweist.

6. Verfahren zum Erhöhen der Wärmebeständigkeit von Poly(phenylenether)harz-Mischungen mit mindestens einem kristallinen Harz, wobei das Verfahren aus dem Vermischen eines Poly(phenylenether)harzes mit einer Grenzviskosität von weniger als 0,30 dℓ/g, gemessen in Chloroform bei 25°C, mit mindestens einem kristallinen Harz besteht, das einen kristallinen Schmelzpunkt von mehr als der Glasübergangs-Temperatur des Poly(phenylenether)harzes aufweist, worin das kristalline Harz ausgewählt ist aus der Gruppe bestehend aus Polyesterharzen, Polyamidharzen und Polyarylensulfidharzen.

7. Verfahren nach Anspruch 6, worin das mindestens eine kristalline Harz einen Schmelzpunkt von mindestens etwa 210°C aufweist.

8. Verfahren nach Anspruch 7, worin das Polyphenylenetherharz eine dispergierte Phase ist.

## Revendications

1. Composition thermoplastique constituée de :
(a) une phase dispersée constituée d'une résine de poly(éther de phénylène) ayant une viscosité intrinsèque, mesurée dans le chloroforme à 25 °C, inférieure à 0,30 dl/g, et
(b) une phase continue constituée d'une résine cristalline ayant un point de fusion cristalline supérieur à la température de transition vitreuse de la résine de poly(éther de phénylène), ladite résine cristalline étant choisie parmi les résines de polyester, les résines de polyamide et les résines de poly(sulfure d'arylène).

2. Composition thermoplastique constituée de :
(a) une phase dispersée constituée d'une résine de poly(éther de phénylène) ayant une viscosité intrinsèque, mesurée dans le chloroforme à 25 °C, inférieure à 0,30 dl/g, et
(b) une phase continue constituée d'une résine cristalline ayant un point de fusion cristalline supérieur à la température de transition vitreuse de la résine de poly(éther de phénylène), ladite résine cristalline étant choisie parmi les résines de polyester, les résines de polyamide et les résines de poly(sulfure d'arylène), et éventuellement
(c) un copolymère d'une résine de poly(éther de phénylène) et de ladite résine cristalline (b), la résine cristalline ayant un point de fusion cristalline supérieur à la température de transition vitreuse de la résine de poly(éther de phénylène), et
(d) au moins un additif choisi parmi les agents modifiant la résistance au choc, les charges de renforcement, les sels métalliques non-élastomères, les agents favorisant l'écoulement, les ignifugeants, les agents freinant le dégouttement, les colorants, les pigments, les matières colorantes, les stabilisants, les agents antistatiques, les agents de nucléation pour la cristallisation, les plastifiants, les charges non-renforçantes et les lubrifiants.

3. Composition thermoplastique selon la revendication 1 ou 2, dont la résine cristalline est une résine cristalline ayant un point de fusion d'au moins environ 210 °C.

4. Composition thermoplastique selon la revendication 1 ou 2, pour laquelle la résine cristalline est choisie parmi le poly(téréphtalate de butylène), le poly(téréphtalate d'éthylène), le poly(naphtalate de butylène), le poly(naphtalate d'éthylène), le polyamide-6,6, le polyamide-6, le poly(sulfure de p-phénylène), et les résines de polyester cristallines liquides.

5. Composition thermoplastique qui comprend :
(a) une phase dispersée comprenant une résine de poly(éther de phénylène) ayant une viscosité intrinsèque, mesurée dans le chloroforme à 25 °C, inférieure à 0,30 dl/g,
(b) une phase continue comprenant une résine cristalline ayant un point de fusion cristalline supérieur à la température de transition vitreuse de la résine de poly(éther de phénylène), la résine cristalline étant choisie parmi les résines de polyester, les résines de polyamide et les résines de poly(sulfure d'arylène),
(c) un copolymère d'une résine de poly(éther de phénylène) et de ladite résine cristalline (b), la résine cristalline ayant un point de fusion cristalline supérieur à la température de transition vitreuse de la résine de poly(éther de phénylène).

6. Procédé pour augmenter la résistance à la chaleur des mélanges de résine de poly(éther de phénylène) avec au moins une résine cristalline, procédé qui consiste à mélanger une résine de poly(éther de phénylène) ayant une viscosité intrinsèque, mesurée dans le chloroforme à 25 °C, inférieure à 0,30 dl/g, avec au moins une résine cristalline ayant un point de fusion cristalline supérieur à la température de transition vitreuse de la résine de poly(éther de phénylène), la résine cristalline étant choisie parmi les résines de polyester, les résines de polyamide et les résines de poly(sulfure d'arylène).

7. Procédé selon la revendication 6, dans lequel la au moins une résine cristalline a un point de fusion d'au moins environ 210 °C.

8. Procédé selon la revendication 7, dans lequel la résine de poly(éther de phénylène) constitue une phase dispersée.
